# EUROPÄISCHE PATENTSCHRIFT

(11) **EP 0 629 383 B1**
(45) Veröffentlichungstag und Bekanntmachung des Hinweises auf die Patenterteilung: **10.06.1998**
(21) Anmeldenummer: 94104118.8
(22) Anmeldetag: 16.03.1994
(51) Int. Cl.: A61C 1/05

(54) **Zahnärztlicher Turbinenantrieb**
Dental turbine
Turbine d'outil dentaire

(30) Priorität: 21.06.1993 DE 4320532
(43) Veröffentlichungstag der Anmeldung: 21.12.1994
(73) Patentinhaber: Sirona Dental Systems GmbH & Co.KG, 64625 Bensheim (DE)
(72) Erfinder: Wohlgemuth, Jürgen, Dipl.-Ing., D-64283 Darmstadt (DE)
(74) Vertreter: Isenbruck, Günter, Dr.

(56) Entgegenhaltungen:
- EP-A- 0 497 139
- CH-A- 632 405
- US-A- 3 762 052
- US-A- 5 158 456

## Beschreibung

Die Erfindung bezieht sich auf einen zahnärztlichen Turbinenantrieb mit einem in einem Gehäuse drehbar gelagerten Rotor, der Mittel zur Aufnahme eines Bearbeitungswerkzeuges aufweist und der mit dem Gehäuse einen Turbinenraum bildet, welcher einerseits mit einem Treibluftkanal und andererseits mit einem Rückluftkanal verbunden ist.

Bei zahnärztlichen Turbinenantrieben besteht das Problem, daß nach Abschalten der Treibluft infolge eines entstehenden Soges Luft und damit auch bakteriell kontaminierte Teilchen aus der unmittelbaren Umgebung (Mundhöhle) des Patienten angesaugt und ins Innere des Turbinenhandstückes transportiert werden können. Beim darauffolgenden Wiedereinschalten der Treibluft werden diese Teilchen dann durch den sich mit der Treibluftzufuhr aufbauenden Druck aus dem Handstuck wieder nach außen befördert.

Dieser Vorgang ist äußerst unhygienisch und birgt die Gefahr der Übertragung von Krankheitserregern in sich. Des weiteren können durch Eindringen von insbesondere feuchter Luft und/oder kleinster Partikel die Rotorlager beschädigt werden.

Der Saugeffekt wird durch den Rotor bewirkt, der nach Abschalten der Treibluft aufgrund seiner Massenträgheit und der hohen Drehzahl an sich mehrere Sekunden bis zum Auslauf- bzw. Stillstand des Rotors benötigt. Während dieser Phase wirkt der auslaufende Rotor im Turbinengehäuse wie eine Flügelradpumpe und zentrifugiert die in der Rotorkammer befindliche Luft radial nach außen in den Rückluftkanal, die bei den bekannten Turbinenhandstücken am äußeren Umfang der Rotorkammer angeordnet ist. Im Bereich der Rotorwelle entsteht dabei ein Unterdruck, der ein Nachströmen der Luft von außen durch die vorhandenen Lagerspalte oder andere Öffnungen zur Folge hat.

Um den vorgenannten Einsaugeffekt zu verhindern, sind bereits mehrere Lösungsansätze bekannt geworden:

Aus DE-1 147 003 und 1 107 891 ist es bekannt, nach Abschalten der Treibluftzufuhr bis zum Stillstand des Rotors Druckluft in die Rotorkammern einzublasen. Diese Methode ist an sich sehr wirkungsvoll, jedoch von der Versorgung des Dentalgerätes, an das der Turbinenantrieb angeschlossen ist, abhängig. Außerdem ist der technische Aufwand zur Steuerung des Nachblasens nicht unerheblich.

Aus der EP-0 283 417 ist ein Turbinenantrieb bekannt, bei dem nach Abschalten der Treibluft eine auf den Rotor wirkende mechanische Bremse ein schnelles Abstoppen des Rotors bewirken soll. Eine solche Rotorschnellstoppeinrichtung ist prinzipiell zwar wünschenswert, sie ist jedoch bei dem bekannten Turbinenantrieb nur mit relativ hohem technischem Aufwand zu erzielen.

Aus EP-0 471 916 ist ein Turbinenantrieb bekannt, bei dem auf der Rotorwelle, und zwar vor dem werkzeugnahen Lager, eine Schleuderscheibe aufgesetzt ist, die das Eindringen von Partikeln dadurch verhindern soll, daß diese beim Auftreffen auf die Scheibe radial nach außen geschleudert werden. Eine solche Anordnung ist zwar sehr einfach, verhindert aber das Eindringen von Partikeln nicht zufriedenstellend, da der rotorseitige Saugeffekt nicht beseitigt ist.

Aus EP-0 497 139, welche die Merkmale des Oberbegriffs von Anspruch 1 zeigt, ist ein zahnärztliches Handstück bekannt, welches sich nicht ausdrücklich mit dem Verhindern des Rücksaugens von Partikeln beschäftigt, vielmehr nach Möglichkeiten sucht, ein rasches Abstoppen des Rotors nach dem Abschalten der Treibluftzufuhr zu erzielen. Hierzu sind auf den Rotor direkt einwirkende Bremsmittel vorgesehen, die in Abhängigkeit von der Treibluftströmung gesteuert werden. Eine der zahlreichen Varianten umfaßt eine elastisch vorgespannte Ringscheibe, die am äußeren Rand im Turbinengehäuse festgehalten ist und mit ihrem Innenrand beim Abschalten der Treibluftzufuhr an einen Anlageteil des Rotors im Sinne eines Abbremsens zur Anlage gelangt. Bei allen aufgezeigten Varianten wird ein Teil der Rückluft (Restgasströmung) bewußt über die Lager, insbesondere die werkzeugseitigen Lager nach außen geleitet, d.h. der Turbinenraum ist hier direkt mit der Außenluft (Atmosphäre) in Verbindung.

Der im Anspruch 1 angegebenen Erfindung liegt die Aufgabe zugrunde, einen zahnärztlichen Turbinenantrieb zu schaffen, bei dem ein wirkungsvolles Verhindern des Rücksaugens von Partikeln gegeben ist, und zwar mit minimalem technischem Aufwand. Die vorzusehenden Mittel sollen außerdem unabhängig von der Versorgung der Turbine funktionieren.

Die nachfolgend beschriebenen Ausführungsbeispiele sind jede für sich oder auch miteinander in Kombination anwendbar. Gemeinsamer Vorteil aller aufgezeigten Varianten ist, daß die Maßnahmen im Turbinenhandstück integrierbar sind, daß die Wirkung unabhängig von der Turbinenversorgung gegeben ist und daß ein minimaler technischer Aufwand zur Realisierung vorzusehen ist.

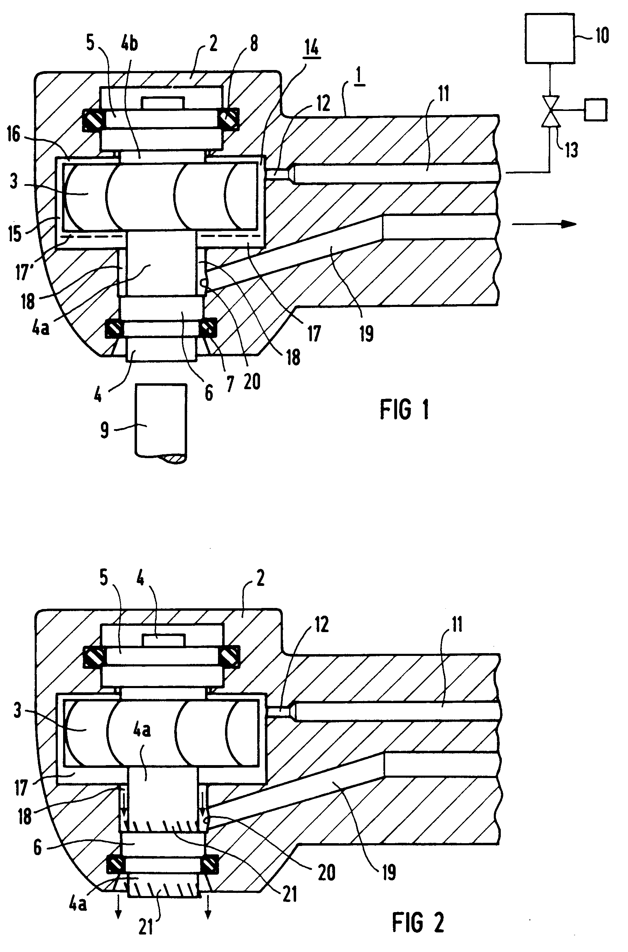

Die Figuren 1 bis 4 zeigen drei Varianten der Erfindung am Beispiel eines in einem Kopfgehäuses eines zahnärztlichen Turbinenhandstückes gelagerten Rotors, dessen Welle beidseitig im Gehäuse gelagert ist. Im Rahmen der Erfindung sind jedoch auch Modifikationen von den gezeigten Ausführungen möglich.

Die Fig. 1 zeigt im Längsschnitt einen Teil eines allgemein mit 1 bezeichneten zahnärztlichen Turbinenhandstückes, in dessen Kopfgehäuse 2 ein Rotor 3 gelagert ist. Hierzu ist die Rotorwelle 4 beidseitig in Kugellagern 5, 6 gelagert, die sich über O-Ringe 7, 8 im Gehäuse 2 abstützen. Die Rotorwelle 4 enthält in bekannter Weise eine nicht dargestellte Aufnahmeeinrichtung zur Halterung eines Bearbeitungswerkzeuges 9, z.B. eines Bohrers. Der Rotor 3 wird von einer Druckluftquelle 10 über einen Zuführkanal 11 mit Treibluft versorgt, die über eine Düsenöffnung 12 auf die Turbinenschaufeln strömt. Die Treibluft kann mittels eines Ventils 13 zu- und abgeschaltet werden.

Der Strömungsweg der Treibluft im Turbinenraum 14, also zwischen Ein- und Austritt in bzw. aus dem Rotor, wird normalerweise durch enge Luftspalte begrenzt, die zwischen Rotor und benachbarten Gehäuse- und Lagerwandungen gebildet werden. In der Figur sind diese mit 15, 16 und 17' bezeichnet. Der beim Stand der Technik an der dem Werkzeug benachbarten Stirnseite des Rotors üblicherweise vorhandene enge Luftspalt 17', der in der Figur mit unterbrochener Linienführung angedeutet ist, ist entsprechend einem Merkmal der Erfindung vergrößert und bildet dort eine Abströmkammer 17, die in einen konzentrisch zum Rotorwellenabschnitt 4a erstreckenden Abströmkanal 18 übergeht, der hier vorzugsweise als Ringkanal ausgebildet ist. In diesen Ringkanal mündet der Rückluftkanal 19, und zwar unmittelbar benachbart dem werkzeugseitigen Kugellager 6 und dem Wellenabschnitt 4a.

Das den Rotor 3 umgebende Gehäuse 2 hat außer der Zufuhrdüse 12 und der Öffnung 20 zum Rückluftkanal 19 keine weiteren Kanäle und Öffnungen, die einen freien Luftaustritt im peripheren Bereich des Rotors und der Lager ermöglichen könnten. Dies bedeutet, daß bei abgeschalteter Treibluft bzw. bei unterbrochener Treibluftzufuhr in der Auslaufphase des Rotors der Turbinenraum 14 bis auf den achsnah der Rotorwelle verlaufenden Ringkanal 18 geschlossen ist. Die vom Rotor beim Auslauf nach außen zentrifugierte Luft kann also nicht absttrömen und somit auch keine Luft über die Rotorlager nachsaugen.

Wie im dargestellten Ausführungsbeispiel zu ersehen ist, befindet sich die Öffnung 20, über die der Ringkanal 18 mit dem Rückluftkanal 19 verbunden ist, einerseits im Wellenbereich des Rotors, also dort, wo der Durchmesser des rotierenden Systems am kleinsten ist, und andererseits in unmittelbarer Nähe des werkzeugseitigen Lagers 6, also möglichst weit entfernt vom größten Durchmesser des rotierenden Systems. Bei einer solchen Anordnung kann sich kein nenneswerter Sog- bzw. Saugeffekt bilden, weil durch den kleinen Wellendurchmesser in Nähe der Rückluftöffnung die Zentrifugalkräfte auf die Luft ohnehin sehr gering sind und weil die Rückluftöffnung und der Lagerspalt des Lagers 6 sich im gleichen Bereich befinden und auch mit dem gleichen Rotorwellenabschnitt (4a) korrespondieren, wodurch sich am Lagerspalt gegenüber der Rückluftöffnung 20 kein Unterdruck bilden kann.

Bei der Ausführungsform nach Figur 2 ist der dem Werkzeug zugewandte Wellenabschnitt 4a mit Leitflächen 21 versehen. Diese sind beidseitig des Lagers 6 angeordnet und so gestaltet, daß sie bei Rotation des Rotors eine Luftströmung erzeugen, die in Pfeilrichtung, also von innen nach außen, gerichtet ist. Durch diese Luftströmung wird eine Gegenventilation erzeugt, die dem Eindringen von Partikeln, Aerosol, Keimen od.dgl. zusätzlich entgegenwirkt.

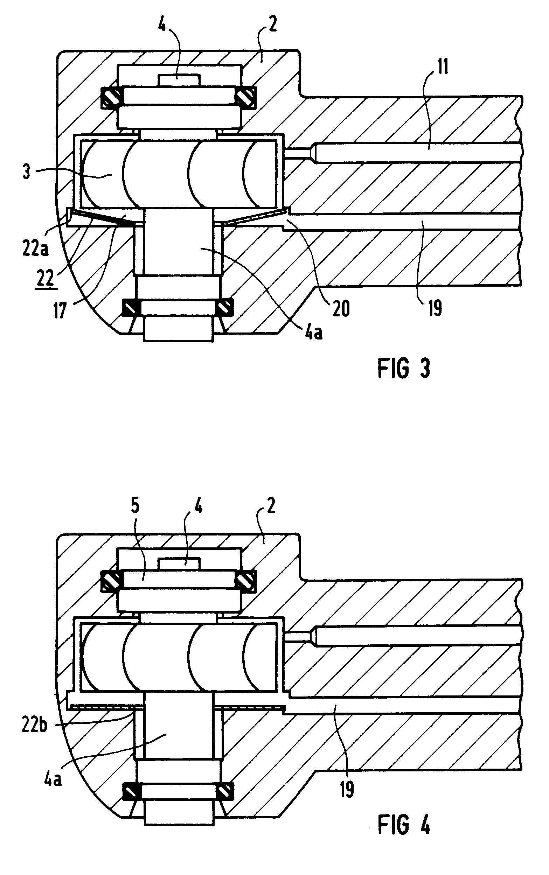

Beim dritten Ausführungsbeispiel gemäß den Figuren 3 und 4 ist konzentrich zur Rotorwelle 4, und zwar ebenfalls benachbart dem werkzeugseitigen Wellenabschnitt 4a, ein selbstwirkendes Ventil vorgesehen, welches den Rückluftkanal 19 bzw. die Rückluftöffnung 20 selbsttätig schließt, wenn die Treibluftzufuhr unterbrochen oder die Treibluft abgeschaltet wird und welches öffnet, wenn die Unterbrechung wieder rückgängig gemacht wird oder die Treibluft wieder eingeschaltet wird. Es läßt sich so wirksam verhindern, daß während des Rotorauslaufs Treibluft in den Rückluftkanal zentrifugiert wird und Luft über die Lager nachgesaugt wird. Die Stellkraft für dieses Ventil wird unmitelbar von der Treibluft aufgebracht. Im hier gezeigten Ausführungsbeispiel besteht das Ventil aus einer federelastischen Scheibe 22, die beispielsweise eine Tellerfeder sein kann, die in der Abströmkammer 17, also im Strömungsweg zwischen Rotor 3 und Rückluftkanal 19, angeordnet ist. Die Scheibe 22 ist bei dieser Ausführungsform konzentrisch zum Rotor am Gehäuse 2 montiert. Bei abgeschalteter Treibluft, also bei auslaufendem und stillstehendem Rotor verschließt die Scheibe 22 mit ihren äußeren Ringwandungsflächen 22a den Rückluftkanal (Fig. 3). Beim Einschalten der Treibluft wird die Scheibe durch den sich aufbauenden Druck entgegen der Federkraft nach unten gedrückt, wodurch der Rückluftkanal wieder freigegeben wird (Fig. 4).

Hinsichtlich der Anordnung und Ausbildung der federelastischen Scheibe sind verschiedene Modifikationen denkbar. So ist es denkbar, die Scheibe nicht am Gehäuse zu montieren, sondern an der Rotorwelle; ebenso ist es denkbar, die Scheibe mit ihren äußeren Ringwandungsflächen zu fixieren und die Steuerung der Rückluftöffnung über die inneren Ringwandungsflächen 22b zu realisieren. Gemäß einer vorteilhaften Ausgestaltung kann die Scheibe gleichsam als Schnellstoppeinrichtung für den Rotor nach Abschalten der Treibluft ausgenutzt werden. Vorteilhaft ist es, wenn die dem Werkzeug zugewandte Stirnseite des Rotors und die mit dieser Stirnfläche korrespondierende Ringwandungsfläche der Scheibe beim Abschalten der Treibluft miteinander im Sinne einer Abbremsung des Rotors kontaktieren.

## Patentansprüche

1. Zahnärztlicher Turbinenantrieb mit einem in einem Gehäuse (2) zwischen zwei Kugellagern (5,6) gelagerten Rotor (3), der in bekannter Weise Mittel zur Aufnahme eines Bearbeitungswerkzeuges (9) aufweist und der mit dem Gehäuse (2) und den rotorseitigen Stirnseiten der Kugellager einen Turbinenraum (14) bildet, welcher einerseits mit einem Zufuhrkanal (11) und andererseits mit einem Rückluftkanal (19) für ein Antriebsmedium verbunden ist, **dadurch gekennzeichnet,** daß der Turbinenraum (14) zwischen der werkzeugseitigen Stirnseite des Rotors (3), dem Gehäuse (2) und der rotorseitigen Stirnseite des werkzeugseitigen Kugellagers (6) eine Abströmkammer (17) bildet, die größer ist als der Spalt (16), welcher auf der der Werkzeugaufnahme abgewandten Stirnseite des Rotors zwischen diesem, dem Gehäuse (2) und der Stirnseite des der Werkzeugaufnahme abgewandten Kugellagers (5) gebildet ist, wobei die Abströmkammer (17) einen Abströmkanal (18) einschließt, der sich achsnah des werkzeugseitigen Rotorwellenabschnittes (4a) erstreckt, und daß der Rückluftkanal (19) von der Abströmkammer (17) oder dem Abströmkanal (18) aus wegführt.

2. Turbinenantrieb nach Anspruch 1, **dadurch gekennzeichnet,** daß der Rückluftkanal (19) unmittelbar benachbart dem werkzeugnahen Rotorlager (6) und dem Rotorwellenabschnitt (4a) in den Abströmkanal (18) mündet.

3. Turbinenantrieb nach Anspruch 1 oder 2, **dadurch gekennzeichnet,** daß der Abströmkanal (18) als den werkzeugseitigen Rotorwellenabschnitt (4a) konzentrisch umgebender Ringkanal ausgebildet ist.

4. Turbinenantrieb nach einem der Ansprüche 1 bis 3, **dadurch gekennzeichnet,** daß in der Abströmkammer ein Schließmittel (22) vorhanden ist, welches die Mündungsöffnung (20) des Rückluftkanals (19) in der Auslaufphase des Rotors (3) nach Unterbrechung der Treibluftzufuhr schließt und nach Aufhebung der Unterbrechung wieder öffnet.

5. Turbinenantrieb nach Anspruch 1, **dadurch gekennzeichnet,** daß die Rotorwelle (4) im werkzeugnahen Bereich am Umfang Leitflächen (21) aufweist, die so gestaltet sind, daß bei Rotation des Rotors (3) eine nach außen gerichtete Luftströmung erzeugt wird.

6. Turbinenantrieb nach Anspruch 5, **dadurch gekennzeichnet,** daß die Leitflächen (21) beidseitig des werkzeugnahen Lagers (6) an der Rotorwelle (4) angeordnet sind.

7. Turbinenantrieb nach Anspruch 4, **dadurch gekennzeichnet,** daß das Schließen und Öffnen des Mittels (22) selbsttätig in Abhängigkeit von der Druckluftzufuhr erfolgt.

8. Turbinenantrieb nach Anspruch 7, **dadurch gekennzeichnet,** daß ein federelastisches Mittel (22) vorgesehen ist.

9. Turbinenantrieb nach Anspruch 8, **dadurch gekennzeichnet,** daß in der Abströmkammer (17) konzentrisch zur Turbinenwelle (4) eine Federscheibe (22) angeordnet ist, die mit ihrer einen (äußeren oder inneren) Ringwandungsfläche an der Rotorwelle (4) oder am Gehäuse (2) befestigt ist und mit ihrer anderen Ringwandungsfläche die Öffnung (20) verschließt bzw. freigibt.

10. Turbinenantrieb nach Anspruch 9, **dadurch** **gekennzeichnet,** daß die Federscheibe (22) so ausgebildet und angeordnet ist, daß ihre die Öffnung (20) verschließende bzw. freigebende Ringwandungsfläche (22a) dann, wenn die Treibluftzufuhr unterbrochen wird, an der Stirnfläche des Rotors (3) im Sinne einer Abbremsung des Rotors zur Anlage kommt.

## Claims

1. Dental turbine drive having a rotor (3) mounted in a housing (2) between two ball bearings (5, 6), which rotor in known manner has means for receiving a processing tool (9) and which, with the housing (2) and the rotor-side front sides of the ball bearings, forms a turbine chamber (14), which on the one hand is connected to a supply channel (11) and on the other hand to a return air channel (19) for a driving medium, characterized in that the turbine chamber (14) between the tool-side front side of the rotor (3), the housing (2) and the rotor-side front side of the tool-side ball bearing (6) forms an exit chamber (17) which is larger than the gap (16) which is formed on the front side of the rotor directed away from the tool receptacle between the rotor, the housing (2) and the front side of the ball bearing (5) directed away from the tool receptacle, whereby the exit chamber (17) encloses an exit channel (18) which extends axially close to the tool-side rotor shaft section (4a), and in that the return air channel (19) leads away from the exit chamber (17) or the exit channel (18).

2. Turbine drive according to claim 1, characterized in that the return air channel (19) opens into the exit channel (18) directly adjacent to the rotor bearing (6) near the tool and directly adjacent to the rotor shaft section (4a).

3. Turbine drive according to claim 1 or 2, characterized in that the exit channel (18) is constructed as an annular channel which concentrically surrounds the tool-side rotor shaft section (4a).

4. Turbine drive according to one of claims 1 to 3, characterized in that in the exit chamber closing means (22) are present which close the opening (20) of the return air channel (19) in the slowing-down phase of the rotor (3) after the interruption of the supply of propelling air and open it again after the interruption is stopped.

5. Turbine drive according to claim 1, characterized in that the rotor shaft (4) in the region near the tool has on the circumference control surfaces (21) which are formed in such a way that with rotation of the rotor (3) an outwardly directed air flow is generated.

6. Turbine drive according to claim 5, characterized in that the control surfaces (21) are arranged on the rotor shaft (4) on both sides of the bearing (6) near the tool.

7. Turbine drive according to claim 4, characterized in that the closing and opening of the means (22) takes place automatically in dependence upon the supply of compressed air.

8. Turbine drive according to claim 7, characterized in that elastic means (22) are provided.

9. Turbine drive according to claim 8, characterized in that in the exit chamber (17) a spring washer (22) is arranged concentrically to the turbine shaft (4), which spring washer with its one (external or internal) annular wall surface is fastened to the rotor shaft (4) or to the housing (2) and with its other annular wall surface seals or unseals the opening (20).

10. Turbine drive according to claim 9, characterized in that the spring washer (22) is constructed and arranged in such a way that its annular wall surface (22a) sealing or unsealing the opening (20) comes to rest on the front surface of the rotor (3) in the sense of a braking of the rotor when the supply of propelling air is interrupted.

## Revendications

1. Dispositif d'entraînement de turbine de dentisterie comportant un rotor (3) qui est monté dans un boîtier (2) entre deux roulements (5, 6) à billes, qui comporte de manière connue des moyens de réception d'un outil (9) d'usinage et qui forme avec le boîtier (2) et les faces frontales côté rotor des roulements à billes une zone (14) de turbine qui communique d'une part avec un conduit (11) d'alimentation et d'autre part avec un conduit (19) de renvoi d'air pour un fluide moteur, caractérisé en ce que la zone (14) de turbine, comprise entre la face frontale côté outil du rotor (3), le boîtier (2) et la face frontale côté rotor du roulement (6) à billes situé côté outil, forme une chambre (17) d'évacuation qui est plus grande que l'interstice (16) qui est formé sur la face frontale du rotor éloigné du dispositif de réception de l'outil entre le rotor, le boîtier (2) et la face frontale du roulement (5) à billes éloigné du dispositif de réception de l'outil, la chambre(17) d'écoulement comprenant un conduit (18) d'écoulement qui s'étend à proximité axiale du tronçon (4a) de l'arbre du rotor situé côté outil, et en ce que le conduit (19) de renvoi d'air s'éloigne de la chambre (17) d'évacuation ou du conduit (18) d'évacuation

2. Dispositif d'entraînement de turbine suivant la revendication 1, caractérisé en ce que le conduit (19) de renvoi d'air débouche dans le conduit (18) d'évacuation directement à proximité du palier (6) du rotor proche de l'outil et du tronçon (4a) de l'arbre du rotor.

3. Dispositif d'entraînement de turbine suivant la revendication 1 ou 2, caractérisé en ce que le conduit (18) d'évacuation est réalisé en conduit annulaire entourant concentriquement le tronçon (4a) de l'arbre du rotor situé côté outil.

4. Dispositif d'entraînement de turbine suivant l'une des revendications 1 à 3, caractérisé en ce qu'il est présent dans la chambre d'évacuation un moyen (22) de fermeture qui, pendant la phase de fin de course du rotor (3) après interruption de l'envoi d'air moteur, ferme l'ouverture (20) d'embouchure du conduit (19) de renvoi d'air et l'ouvre à nouveau après annulation de l'interruption.

5. Dispositif d'entraînement de turbine suivant la revendication 1, caractérisé en ce que l'arbre (4) du rotor comporte dans la zone proche de l'outil , sur le pourtour, des surfaces (21) de guidage, qui sont conformées de telle manière qu'il est produit un écoulement d'air dirigé vers l'extérieur lorsque le rotor (3) tourne.

6. Dispositif d'entraînement de turbine suivant la revendication 1, caractérisé en ce que les surfaces (21) de guidage sont ménagées sur l'arbre (4) du rotor, de part et d'autre du palier (6) proche de l'outil.

7. Dispositif d'entraînement de turbine suivant la revendication 4, caractérisé en ce que la fermeture et l'ouverture du moyen (22) s'effectuent automatiquement en fonction de l'envoi d'air comprimé.

8. Dispositif d'entraînement de turbine suivant la revendication 7, caractérisé en ce qu'il est prévu un moyen (22) élastique.

9. Dispositif d'entraînement de turbine suivant la revendication 8, caractérisé en ce qu'il est monté dans la chambre (17) d'évacuation, concentriquement à l'arbre (4) de turbine, une rondelle (22) élastique, qui est fixée par l'une (extérieure ou intérieure) de ses surfaces de paroi annulaire à l'arbre (4) du rotor ou au boîtier (2) et qui ferme ou dégage l'ouverture (20) par son autre surface de paroi annulaire.

10. Dispositif d'entraînement de turbine suivant la revendication 9, caractérisé en ce que la rondelle (22) élastique est conformée et montée de telle manière que sa surface (22a) de paroi annulaire fermant ou dégageant l'ouverture (20) vient, en vue de ralentir le rotor, en contact avec la face frontale du rotor (3) quand l'envoi d'air moteur est interrompu.
